# EUROPÄISCHE PATENTSCHRIFT

(11) **EP 4 111 679 B1**
(45) Veröffentlichungstag und Bekanntmachung des Hinweises auf die Patenterteilung: **02.04.2025**
(21) Anmeldenummer: 21707955.7
(22) Anmeldetag: 23.02.2021
(51) Int. Cl.: H04N 23/745, G01J 1/02, G01J 1/42, H05B 47/11

(54) **OPTOELEKTRONISCHE SENSORVORRICHTUNG, DETEKTOR UND ELEKTRONISCHES GERÄT SOWIE VERFAHREN ZUM BETREIBEN EINER DERARTIGEN SENSORVORRICHTUNG BZW. EINES DERARTIGEN DETEKTORS**
OPTOELECTRONIC SENSOR APPARATUS, DETECTOR, ELECTRONIC DEVICE, AND METHOD FOR OPERATING SUCH A SENSOR APPARATUS OR SUCH A DETECTOR
DISPOSITIF CAPTEUR OPTOÉLECTRONIQUE, DÉTECTEUR, APPAREIL ÉLECTRONIQUE ET PROCÉDÉ POUR FAIRE FONCTIONNER UN TEL DISPOSITIF CAPTEUR OU UN TEL DÉTECTEUR

(30) Priorität: 25.02.2020 DE 102020202400
(43) Veröffentlichungstag der Anmeldung: 04.01.2023
(73) Patentinhaber: ams-OSRAM International GmbH, 93055 Regensberg (DE)
(72) Erfinder: LYSOV, Andrey, 93055 Regensburg (DE); BOESCKE, Tim, 93055 Regensburg (DE)
(74) Vertreter: Impuls legal PartG mbB
(86) Internationale Anmeldenummer: PCT/EP2021/054422
(87) Internationale Veröffentlichungsnummer: WO 2021/170570

(56) Entgegenhaltungen:
- WO-A1-00/07363
- WO-A1-2007/049900
- US-A1- 2011 157 415
- US-A1- 2018 348 051

## Beschreibung

Die vorliegende Patentanmeldung beansprucht die Priorität der deutschen Patentanmeldung mit der Anmeldenummer 10 2020 202 400.6.

Die vorliegende Erfindung betrifft eine optoelektronische Sensorvorrichtung, einen Detektor, ein elektronisches Gerät, wie zum Beispiel ein Smartphone, sowie Verfahren zum Betreiben einer derartigen Sensorvorrichtung beziehungsweise eines derartigen Detektors.

Optoelektronische Sensorvorrichtungen, die Licht detektieren, zum Beispiel mittels einer oder mehrerer Photodioden, und die in Abhängigkeit von dem detektierten Licht ein elektrisches Signal, insbesondere einen elektrischen Strom und/oder eine elektrische Spannung, ausgeben, finden zahlreiche Anwendungen in diversen technischen Produkten. Als Beispiel sei hier die Verwendung von optoelektronischen Sensoreinrichtungen zum Detektieren des sogenannten Flackerns von elektrisch betriebenen Lichtquellen genannt.

Stromnetze sind typischerweise mit einer Netzfrequenz von 50 Hertz (Hz), 60 Hz oder einer anderen Frequenz getaktet. Lichtquellen, die mit Elektrizität aus einem Stromnetz betrieben werden, neigen daher dazu, zu flackern. Die Flackerfrequenz entspricht dabei normalerweise der doppelten Netzfrequenz. Das Flackern kann zum Beispiel zu Verzerrungen in Bildern führen, die mit Kameras, insbesondere CMOS-basierten Kameras, zum Beispiel in Smartphones oder Industrieanwendungen aufgenommen werden, wenn der Bildbereich mit einer flackernden Lichtquelle ausgeleuchtet wird. CMOS steht hierbei für Complementary Metal-Oxide-Semiconductor. Bei CMOS-basierten Kameras mit einer Umlaufblende, die auch als "rolling shutter" bezeichnet wird, kann flackerndes Licht zur Entstehung von horizontalen Streifen mit schwankenden Helligkeiten im Bild führen, insbesondere wenn die Bildaufnahmefrequenz kein Teiler oder Vielfaches der Flackerfrequenz ist. Das Phänomen der horizontalen Streifen mit schwankenden Helligkeiten in aufgenommenen Bildern wird auch als "Banding" bezeichnet. Das Problem des Banding kann gelöst werden, wenn die Bildaufnahmefrequenz mit der Flackerfrequenz synchronisiert wird. Dazu muss die Flackerfrequenz aus dem Licht extrahiert werden.

Aus dem Stand der Technik sind Sensoren bekannt, die eine Detektion der Flackerfrequenz erlauben.

Beispielsweise erlaubt der Sensor VD6281 von STMicroelectronics die Ermittlung einer Flackerfrequenz. Außerdem kann ein gesampeltes Lichtsignal über einen Ausgang als eine Bitfolge ausgegeben werden.

Der Sensor TCS3707 von der AMS AG weist einen integrierten Flackerdetektor auf, der eine Flackerdetektion bei 50 Hz oder 60 Hz erlaubt. Der Sensor gibt ein bestimmtes Signal aus, wenn eine Flackerfrequenz bei den genannten Frequenzen detektiert wurde.

Der Sensor TMD 49103S von der AMS AG weist ebenfalls einen integrierten Flackerdetektor auf, der eine Flackerdetektion bei 50 Hz oder 60 Hz erlaubt. Außerdem gibt der Sensor ein Signal aus, wenn eine Flackerfrequenz bei den genannten Frequenzen detektiert wurde. Der Sensor weist einen integrierten Pufferspeicher auf, der nach dem FIFO-Prinzip arbeitet. FIFO steht hierbei für "first in - first out". Dies bedeutet, dass dasjenige Element, das zuerst gespeichert wurde, auch zuerst wieder aus dem Speicher entnommen wird. In dem Pufferspeicher werden Messwerte der gemessenen Lichtintensität gespeichert. Diese Messwerte können über eine I2C-Schnittstelle, die auch als I2C-Interface bezeichnet wird, ausgelesen werden. Durch weitere Verarbeitung der ausgelesenen Messwerte können auch Flackerfrequenzen, die nicht bei 50 Hz oder 60 Hz liegen, ermittelt werden.

Die Druckschriften US 2011/157415 A1, US 2018/348051 A1, WO 00/07363 A1 und WO 2007/049900 A1 offenbaren optoelektronische Sensorvorrichtungen und Verfahren gemäß den Oberbegriffen der unabhängigen Ansprüche.

Andere Anwendungen von Lichtsensoren neben der Bestimmung von Flackerfrequenzen sind ferner denkbar, wie etwa die Erfassung von Lichtintensitätsschwankungen.

Der vorliegenden Erfindung liegt als eine Aufgabe zugrunde, eine kompakt und kostengünstig herstellbare optoelektronische Sensorvorrichtung bereitzustellen, die insbesondere vielfältige Anwendungsmöglichkeiten bietet.

Die Aufgabe wird durch eine optoelektronische Sensorvorrichtung mit den Merkmalen des Anspruchs 1 gelöst. Bevorzugte Ausführungsformen und Weiterbildungen der Erfindung sind in den abhängigen Ansprüchen angegeben.

Eine erfindungsgemäße optoelektronische Sensorvorrichtung umfasst eine optoelektronische Detektionseinrichtung, die eine Detektorfläche zur Detektion von Licht aufweist, und die in Abhängigkeit von detektiertem Licht, das mittels der Detektorfläche detektiert wird, ein elektrisches Signal bereitstellt. Die Sensorvorrichtung umfasst außerdem eine Signalerfassungseinrichtung, welche dazu ausgebildet ist, während eines Zeitintervalls von sich wiederholenden Zeitintervallen wenigstens einen Signalwert des elektrischen Signals in einem Speicher zu speichern und nach Ablauf des Zeitintervalls ein Anzeigesignal auszugeben.

Das Anzeigesignal dient zur Signalisierung, dass der wenigstens eine Signalwert ausgelesen werden kann.

Bei bevorzugten Varianten der Erfindung wird pro Zeitintervall genau ein Signalwert in dem Speicher gespeichert. Es können allerdings auch alternative Varianten der Erfindung zum Einsatz kommen, bei denen pro Zeitintervall eine Anzahl an Signalwerten in dem Speicher gespeichert wird. Die Anzahl kann einer natürlichen Zahl, beispielsweise 2, 3, 4 oder noch mehr, an Signalwerten entsprechen.

Die optoelektronische Detektionseinrichtung kann eine oder mehrere Photodioden aufweisen, zum Beispiel ein Array mit Photodioden, die einfallendes Licht absorbieren und in einen elektrischen Strom umwandeln können. Der elektrische Strom kann abhängig sein von der Intensität des einfallenden Lichts. Die Detektionseinrichtung kann wenigstens einen Analog-Digital-Wandler aufweisen, der aus dem elektrischen Strom einen Signalwert erzeugt, der insbesondere von dem elektrischen Strom und somit von der Lichtintensität abhängt. Der Signalwert kann einem Messwert entsprechen, der von der detektierten Lichtintensität abhängig ist. Während eines Zeitintervalls können zeitversetzt mehrere solcher Signalwerte ermittelt werden, die somit den Verlauf des elektrischen Signals wiederspiegeln. Um einen Messvorgang durchzuführen, benötigt der Sensor eine bestimmte Integrationszeit. Werden mehrere Messungen nacheinander durchgeführt, kann der zeitliche Verlauf vom optischen Eingangssignal abgebildet werden.

Nach dem Ablauf des Zeitintervalls, der einer Integrationszeit entsprechen kann, erfolgt die Ausgabe des Anzeigesignals. Dieses dient als Signalisierung, zum Beispiel für eine mit der Sensorvorrichtung verbundene Steuereinrichtung, um anzuzeigen, dass das Zeitintervall beendet ist und der während des Zeitintervalls bzw. der Integrationszeit ermittelte Signalwert aus dem Speicher ausgelesen werden kann. Die Steuereinrichtung kann sodann über eine Kommunikationsschnittstelle mit der Sensorvorrichtung kommunizieren und den Signalwert, der während des Zeitintervalls gespeichert wurde, auslesen.

Nach Abschluss eines ersten Zeitintervalls und damit eines Messvorgangs fängt der nächste Messvorgang in einem nachfolgenden, zweiten Zeitintervall an. Außerdem erfolgt das Auslesen des in dem ersten Zeitintervall gemessenen Messwertes. Nach Abschluss des Auslesevorgangs kann sodann der während des nachfolgenden, zweiten Zeitintervalls erfasste, wenigstens eine Signalwert gespeichert werden. Der während des ersten Zeitintervalls ermittelte, wenigstens eine Signalwert kann dabei überschrieben oder gleich nach dem erwähnten Auslesevorgang gelöscht werden. Insbesondere kann, sobald das erste Byte des Messwertes ausgelesen wird oder ist, das Anzeigesignal auf dem Interrupt-Ausgang nicht mehr angezeigt werden.

Die Sensorvorrichtung kann bevorzugt während des, insbesondere festlegbaren, Zeitintervalls nur einen Signalwert in dem Speicher speichern. Der Signalwert kann aus mehreren Bytes bestehen. Ein Signalwert entspricht dabei einem digitalen Wert des zu einem bestimmten Zeitpunkt innerhalb des Zeitintervalls detektierten optischen Signals. Mehrere aufeinanderfolgende Signalwerte, die insbesondere in aufeinanderfolgenden Zeitintervallen detektiert werden, spiegeln daher den zeitlichen Verlauf des optischen Signals wieder. Nach Ablauf des Zeitintervalls kann die Sensorvorrichtung mittels des Anzeigesignals signalisieren, dass der wenigstens eine erfasste Signalwert ausgelesen werden kann. Die ausgelesenen Daten können sodann von einer anderen Einrichtung, beispielweise einer mit der Sensorvorrichtung in Kommunikation stehenden Steuereinrichtung, weiterverarbeitet werden. Dabei können die ausgelesenen Signalwerte beispielweise zur Ermittlung einer Flackerfrequenz des detektierten Lichts eingesetzt werden.

Da in der Sensorvorrichtung keine Speicherung der Signalwerte über mehrere Zeitintervalle vorgesehen ist, sondern nur der während eines Zeitintervalls erfasste wenigstens eine und bevorzugt genau eine Signalwert gespeichert wird, kann der Speicher klein gehalten werden. Beispielsweise kann der Speicher als Speicherregister mit zum Beispiel 2 Byte Speicherkapazität realisiert werden. Ein größerer Speicher, etwa ein FIFO-Pufferspeicher, wird demgegenüber nicht benötigt. Die Sensorvorrichtung kann dadurch einfach und kompakt und somit auch kostengünstig ausgestaltet werden.

Die Sensorvorrichtung kann als integrale Schaltung, zum Beispiel auf einem Stück Silizium, realisiert werden. Dies erlaubt es, den Grad an Kompaktheit und Einfachheit sowie die Preisgestaltung weiter zu verbessern.

Bevorzugt ist das Zeitintervall und damit die Dauer eines Messvorgangs einstellbar. Insbesondere kann das Zeitintervall und damit die Dauer eines Messvorgangs über eine Kommunikationsschnittstelle der Sensorvorrichtung einstellbar sein. Die Messgenauigkeit kann durch längere Zeitintervalle verbessert werden.

Das Anzeigesignal kann einem ersten Wert eines digitalen Signals entsprechen. Das digitale Signal kann ein Interrupt-Signal sein. Die Sensorvorrichtung kann beispielweise einen Ausgang oder Pin, insbesondere einen Interrupt-Ausgang oder einen Interrupt-Pin, aufweisen, an welchem das Anzeigesignal als ein erster Wert, beispielsweise "LOW", eines digitalen Signals ausgegeben wird. Wenn kein Anzeigesignal anliegen soll, kann das am Ausgang anliegende digitale Signal demgegenüber einen zweiten Wert, beispielsweise "HIGH", aufweisen. Die Ausgabe des Anzeigesignals als erster Wert des digitalen Signals an einem Ausgang der Sensorvorrichtung ist vorteilhaft, da sehr schnell zwischen dem ersten Wert und dem zweiten Wert umgeschaltet werden kann.

Die Signalerfassungseinrichtung kann außerhalb einer Zeitdauer, während der das dem ersten Wert entsprechende Anzeigesignal ausgegeben wird, einen vom ersten Wert verschiedenen zweiten Wert des digitalen Signals ausgeben.

Nach einer Weiterbildung der Erfindung ist die Signalerfassungseinrichtung dazu ausgebildet, den ersten Wert in den zweiten Wert zu ändern, sobald der wenigstens eine und bevorzugt der genau eine Signalwert wenigstens teilweise aus dem Speicher ausgelesen ist. Es kann vorgesehen sein, dass nach dem Auslesen des Signalwertes der Speicher gelöscht wird. Außerdem kann vorgesehen sein, dass nach dem Auslesen des Signalwertes der in dem nachfolgenden Zeitintervall ermittelte Signalwert gespeichert wird, wobei der im vorhergehenden Zeitintervall gespeicherte Signalwert überschrieben wird.

Die Sensorvorrichtung und insbesondere die Signalerfassungseinrichtung ist dazu ausgebildet, das Anzeigesignal über eine Kommunikationsschnittstelle, insbesondere ein Interrupt-Ausgang, der Sensorvorrichtung auszugeben. Es kann somit einfach von einer externen Einrichtung, wie etwa einer externen Steuereinrichtung, festgestellt werden, dass ein Signalwert ausgelesen werden kann bzw. soll.

Nach einer Ausgestaltung der Erfindung ist die Sensorvorrichtung und insbesondere die Signalerfassungseinrichtung dazu ausgebildet, in dem Speicher nur den wenigstens einen und bevorzugt den genau einen Signalwert des jeweiligen aktuellen Zeitintervalls zu speichern. Der Speicher kann dadurch klein gehalten werden.

Die Sensorvorrichtung und insbesondere die Signalerfassungseinrichtung kann dazu ausgebildet sein, den Signalwert aus einem vorhergehenden Zeitintervall aus dem Speicher zu löschen oder zu überschreiben.

Die Erfindung betrifft auch einen Detektor, insbesondere zur Ermittlung von Lichtflackern, wobei der Detektor eine erfindungsgemäße optoelektronische Sensorvorrichtung aufweist. Der Detektor weist außerdem eine Steuereinrichtung auf, die mit der Sensorvorrichtung in Kommunikationsverbindung steht. Die Steuereinrichtung kann zum Auslesen des wenigstens einen Signalwerts eines jeweiligen Zeitintervalls vorgesehen sein. Ferner kann die Steuereinrichtung dazu ausgebildet sein, insbesondere unter Verwendung eines FFT-Verfahrens oder Quadratur-Detektion, unter Verwendung der Signalwerte von mehreren Zeitintervallen eine Flackerfrequenz des detektierten Lichts zu ermitteln. FFT steht hierbei für FAST-FOURIER-TRANSFORM und bezieht sich auf ein an sich bekanntes Verfahren, um Frequenzanteile aus den ermittelten Signalwerten zu berechnen.

Die Steuereinrichtung kann, insbesondere mittels einer Kommunikationsschnittstelle zwischen der Sensorvorrichtung und der Steuereinrichtung, das Zeitintervall festlegen. Das Zeitintervall kann somit an gewünschte Erfordernisse angepasst werden. Je länger das Zeitintervall gewählt wird, umso weniger Rauschen liegt vor. Ein kürzeres Zeitintervall erlaubt demgegenüber schnellere Messungen.

Die Steuereinrichtung ist dazu ausgebildet, mittels der Kommunikationsschnittstelle, wie etwa einem Interrupt-Ausgang, zwischen der Sensorvorrichtung und der Steuereinrichtung, das Anzeigesignal zu detektieren und in Reaktion auf die Detektion des Anzeigesignals den wenigstens einen Signalwert aus dem Speicher der Sensorvorrichtung auszulesen. Die Steuereinrichtung kann somit nach Empfang des Anzeigesignals den Speicher auslesen.

Die Steuereinrichtung kann dazu ausgebildet sein, die ausgelesenen Signalwerte von mehreren aufeinanderfolgenden Zeitintervallen zu sammeln bzw. zu speichern. Eine nachgeordnete Analyse kann somit anhand der Signalwerte aus mehreren Zeitintervallen erfolgen.

Die Steuereinrichtung kann dazu ausgebildet sein, in Abhängigkeit von den Signalwerte von mehreren aufeinanderfolgenden Zeitintervallen eine Flackerfrequenz für das detektierte Licht zu ermitteln. Hierbei kann insbesondere ein FFT-Verfahren oder ein Quadratur-Detektionsverfahren zum Einsatz kommen.

Die Erfindung betrifft außerdem ein elektronisches Gerät, insbesondere ein tragbares elektronisches Gerät, mit einer erfindungsgemäßen optoelektronischen Sensorvorrichtung, oder mit einem erfindungsgemäßen Detektor, wobei eine Detektorfläche der optoelektronischen Detektionseinrichtung derart in einem Gehäuse des elektronischen Geräts angeordnet ist, dass von außen einfallendes Licht mittels der Detektorfläche detektierbar ist.

Bei dem elektronischen Gerät kann es sich um ein Mobiltelefon, ein Smartphone, ein Tablet oder eine Kamera handeln. Wie zuvor erläutert, kann bei dem elektronischen Gerät eine Flackerfrequenz des Umgebungslichts ermittelt werden. Das elektronische Gerät kann eine Kamera zur Bild- oder Videoaufnahme aufweisen. Die zur Bild- oder Videoaufnahme verwendete Bildaufnahmefrequenz kann mit der Flackerfrequenz synchronisiert werden. Der Effekt des "Banding" kann somit vermieden oder zumindest reduziert werden.

Die Erfindung betrifft außerdem ein Verfahren zum Betreiben einer erfindungsgemäßen optoelektronischen Sensorvorrichtung, wobei bei dem Verfahren:
während eines sich wiederholenden Zeitintervalls ein elektrisches Signal bereitgestellt wird, wobei das elektrische Signal in Abhängigkeit von detektiertem Licht erzeugt wird,
während des Zeitintervalls wenigstens ein Signalwert des elektrischen Signals in dem Speicher gespeichert wird, und
nach Ablauf des Zeitintervalls das Anzeigesignal ausgegeben wird.

Die Erfindung betrifft außerdem ein Verfahren zum Betreiben eines erfindungsgemäßen optoelektronischen Detektors, wobei bei dem Verfahren:
die Sensorvorrichtung nach Ablauf des Zeitintervalls das Anzeigesignal ausgibt,
die Steuereinrichtung das Anzeigesignal detektiert und in Reaktion auf die Detektion des Anzeigesignals den wenigstens einen Signalwert aus dem Speicher der Sensorvorrichtung ausliest,
nach dem Auslesen das Anzeigesignal bis zum Ablauf des nächsten Zeitintervalls nicht angezeigt wird, und
während des nächsten Zeitintervalls wiederum wenigstens ein Signalwert des elektrischen Signals in dem Speicher gespeichert wird.

Der Begriff Licht ist breit zu verstehen und bezieht sich insbesondere allgemein auf elektromagnetische Strahlung. Der Begriff Licht kann insbesondere neben sichtbarem Licht auch infrarotes und/oder ultraviolettes Licht umfassen.

Im Folgenden werden Ausführungsbeispiele der Erfindung unter Bezugnahme auf die beigefügten Zeichnungen näher erläutert. Es zeigen, jeweils schematisch,
- Fig. 1: ein Blockdiagramm eines Detektors mit einer Sensorvorrichtung und einer Steuereinrichtung,
- Fig. 2: ein Blockdiagramm eines erfindungsgemäßen Detektors mit einer Sensorvorrichtung und einer Steuereinrichtung, und
- Fig. 3: ein Zeitablaufdiagramm einer erfindungsgemäßen Sensorvorrichtung.

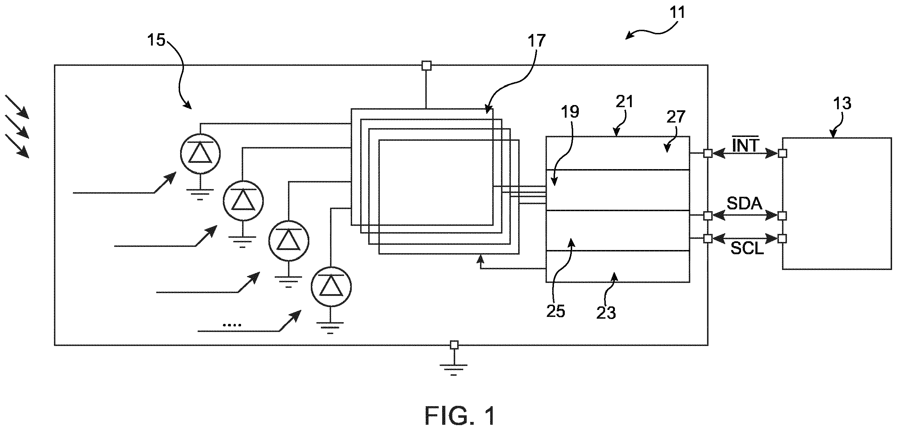

Der in Fig. 1 gezeigte Detektor umfasst eine optoelektronische Sensorvorrichtung 11 und eine Steuereinrichtung 13, die mit der Sensorvorrichtung 11 in Kommunikationsverbindung steht. Sowohl die Sensorvorrichtung 11 als auch die Steuereinrichtung 13 kann in einem jeweiligen Chip implementiert sein.

Die Sensorvorrichtung 11 umfasst eine optoelektronische Detektionseinrichtung 15, hier in Form von mehreren Photodioden, die jeweils eine Detektorfläche zur Detektion von Licht aufweisen. Jede Photodiode 15 kann beispielsweise Licht unterschiedlicher Wellenlänge detektieren, beispielsweise indem unterschiedliche Farbfilter vor die Detektorflächen der Photodioden 15 angeordnet sind. Dadurch ist eine spektrale Auflösung des detektierten Lichts möglich.

Jede Photodiode 15 erzeugt in Abhängigkeit von dem durch die Photodiode 15 detektierten Licht ein elektrisches Signal, das einem der jeweiligen Photodiode 15 zugeordneten Signalkonditionierungskreis 17 bereitgestellt wird. In einem jeweiligen Signalkonditionierungskreis 17 kann das von der zugeordneten Photodiode 15 bereitgestellte Signal zum Beispiel so manipuliert werden, dass es für eine Analog-Digital-Konversion geeignet ist. Dabei kann das Signal zum Beispiel mittels einem Anti-Aliasing-Filter bearbeitet werden. Außerdem kann das elektrische Signal in dem jeweiligen Signalkonditionierungskreis 17 in einen digitalen Signalwert umgewandelt werden.

Die Sensorvorrichtung 11 kann eine Signalerfassungseinrichtung 21 aufweisen, die wenigstens einen Datenspeicher 19 umfasst. Ein jeweiliger digitaler Signalwert kann in dem Datenspeicher 19 gespeichert werden. Signalwerte von verschiedenen Photodioden 15 werden bevorzugt in unterschiedlichen Datenspeichern 19, insbesondere Speicherregister, gespeichert.

Die Signalerfassungseinrichtung 21 kann ein optionales Befehlsregister 23 aufweisen, in welchem Befehle zur Steuerung der Signalkonditionierungskreise 17 gespeichert und angewendet werden können.

Die Signalerfassungseinrichtung 21 umfasst eine Kommunikationsschnittstelle 25, mittels der eine Kommunikation mit der Steuereinrichtung 13 erfolgen kann. Bei der Kommunikationsschnittstelle 25 kann es sich um eine I2C-Schnittstelle handeln, die über Takt- (SCL) und Datenleitung (SDA) eine Kommunikation ermöglicht. I2C steht für Inter-Integrated Circuit.

Außerdem umfasst die Signalerfassungseinrichtung 21 einen Interrupt-Ausgang 27, auch Interrupt-Pin, genannt, über welchen ein Interrupt-Signal INT ausgegeben werden kann, welches wiederum von der Steuereinrichtung 13 detektiert werden kann.

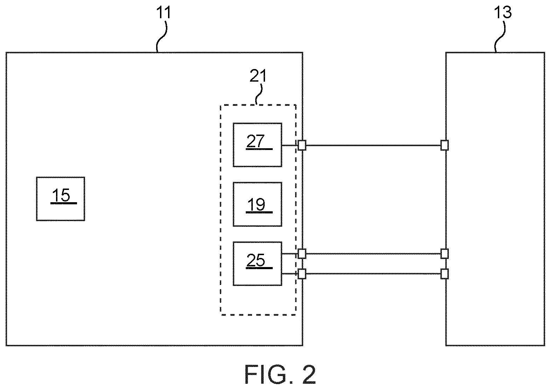

Der in Fig. 2 in einem Blockdiagramm dargestellte, erfindungsgemäße Detektor umfasst eine Sensorvorrichtung 11 und eine Steuereinrichtung 13, die in Kommunikation mit der Sensorvorrichtung 11 ist. Sowohl die Sensorvorrichtung 11 als auch die Steuereinrichtung 13 kann als Chip implementiert sein. Beispielsweise kann die Sensorvorrichtung 11 als integrale Schaltung in einem Silizium-Chip implementiert sein.

Die Sensorvorrichtung 11 umfasst eine optoelektronische Detektionseinrichtung 15, beispielsweise in Form einer oder mehrerer Photodioden oder in Form eines Photodioden-Arrays. Die Detektionseinrichtung 15 ist zur Detektion von Licht ausgebildet und stellt in Abhängigkeit von detektiertem Licht ein elektrisches Signal bereit. Beispielsweise erzeugt eine Photodiode einen elektrischen Strom in Abhängigkeit von der Intensität des Lichts, das die Photodiode absorbiert. Außerdem kann die Detektionseinrichtung 15 einen Analog-Digital-Wandler umfassen, so dass das elektrische Signal in Form eines momentanen Signalwerts bereitgestellt werden kann.

Eine Signalerfassungseinrichtung 21 ist dazu vorgesehen, während eines Zeitintervalls von sich wiederholenden Zeitintervallen einen Signalwert des elektrischen Signals in einem Speicher 19 zu speichern. Zur Ermittlung einer Flackerfrequenz kann beispielsweise bei mehreren vorhandenen Photodioden pro Zeitintervall der Signalwert derjenigen Photodiode gespeichert werden, die Licht in einem Wellenlängenbereich detektiert, der am oder zumindest in der Nähe des Maximums der spektralen Hell-Empfindlichkeit des menschlichen Auges bei Tageslicht ist. Es kann somit gewissermaßen eine Art photopische Response detektiert werden.

Nach Ablauf des Zeitintervalls gibt die Signalerfassungseinrichtung 21 über einen Interrupt-Ausgang 27 ein Anzeigesignal aus, das von der Steuereinrichtung 13 empfangen werden kann. Bei dem Anzeigesignal handelt es sich um einen ersten Zustand, bevorzugt den niedrigen Zustand, eines Interrupt-Signals, das ansonsten in seinem zweiten Zustand, bevorzugt seinem höheren Zustand, ausgegeben wird.

Die Steuereinrichtung 13 kann über die Kommunikationsschnittstelle 25 mit der Sensorvorrichtung 11 kommunizieren. Insbesondere kann die Steuereinrichtung 13 die Länge des Zeitintervalls festlegen und den im Speicher 19 während eines Zeitintervalls gespeicherten Signalwert auslesen.

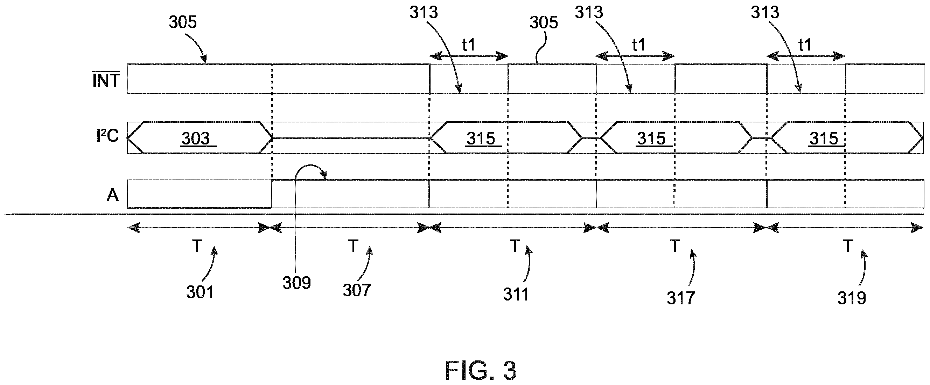

Fig. 3 illustriert die Funktionsweise der Sensorvorrichtung 11 in einem Zeitablaufdiagramm über mehrere aufeinanderfolgende Zeitintervalle T. In der untersten Zeile A wird der Zustand der Sensorvorrichtung 11 angezeigt. In der mittleren Zeile I2C wird eine Kommunikation über die Kommunikationsschnittstelle 25 angezeigt, bei der es sich um eine I2C-Kommunikationsschnittstelle handelt. In der oberen Zeile wird das Signal INT am Interrupt-Ausgang 27 angezeigt.

Während des ersten Zeitintervalls T, 301 befindet sich die Steuereinrichtung 13 in einem Ruhemodus, der auch als Standby-Modus bezeichnet wird. Über die Kommunikationsschnittstelle 25 startet die Kommunikation 303 zwischen der Steuereinrichtung 13 und der Sensorvorrichtung 11. Am Interrupt-Ausgang 27 (vgl. INT) wird ein Normalzustand 305 des Interrupt-Signals angezeigt, hier in Form eines hohen Signalpegels.

Während des 2. Zeitintervalls T, 307 erfolgt eine Messung (siehe "Messung läuft" 309 in der 3. Zeile von Fig. 3). Während dieses Zeitintervalls 307 wird ein ermittelter Signalwert des elektrischen Signals in dem Speicher 19 gespeichert.

Nach Ablauf des 2. Zeitintervalls 307 und somit zu Beginn eines nachfolgenden 3. Zeitintervalls 311 erfolgt am Interrupt-Ausgang 27 (INT) die Ausgabe des Anzeigesignals 313, indem das ausgebebene Interrupt-Signal von dem Normalzustand (siehe INT, 305) in einen Zustand mit niedrigem Signalpegel geschaltet wird. Dieser Zustand 313 verbleibt für eine Zeitdauer t1 bestehen. Die Zeitdauer t1 kann einer Zeitspanne entsprechen, die benötigt wird, um ein erstes Byte des Signalwerts, der während des 2. Zeitintervalls 307 ermittelt wurde, aus dem Speicher auszulesen.

Nach Ablauf der Zeitdauer t1 ändert sich der Zustand am Interrupt-Ausgang 27 wieder in den Normalzustand 305. INT geht damit wieder in den Normalzustand 305 mit hohem Signalpegel. Wie in der 2. Zeile in Fig. 3 gezeigt ist, kann eine Datenübertragung 315 zwischen der Steuereinrichtung 13 und der Sensorvorrichtung 11 zum Auslesen aller Bytes des Signalwerts aus dem vorhergehenden Zeitintervall sich über einen großen Teil des nachfolgenden Zeitintervalls erstrecken. Beispielsweise kann die Zeitdauer t1 ungefähr halb so lang sein wie die Dauer der Datenübertragung 315.

Der vorstehend beschriebene Vorgang wiederholt sich für die nachfolgenden Zeitfenster, beispielsweise ein viertes und fünftes Zeitfenster 317 und 319, entsprechend. Der Messvorgang endet durch einen entsprechenden Befehl der Steuereinrichtung 13 an die Sensorvorrichtung 11 (nicht gezeigt).

Die Steuereinrichtung 13 oder eine nachgeordnete Einrichtung kann die über mehrere Zeitintervalle T gemessenen Signalwerte sammeln und weiterverarbeiten. Beispielsweise kann mittels eines FFT-Verfahrens eine eventuell vorhandene Flackerfrequenz des detektierten Lichts berechnet werden. Die maximal mögliche bestimmbare Flackerfrequenz ergibt sich dabei aus dem Inversen der doppelten Zeitdauer (fₘₐₓ = 1/(2*T)).

### BEZUGSZEICHENLISTE

- 11: Sensorvorrichtung
- 13: Steuereinrichtung
- 15: Detektionseinrichtung, Photodiode
- 17: Signalkonditionierungsschaltung
- 19: Datenspeicher
- 21: Signalerfassungseinrichtung
- 23: Befehlsregister
- 25: Kommunikationsschnittstelle
- 27: Interrupt-Ausgang
- 301: erstes Zeitintervall
- 303: Kommunikation startet
- 305: Normalzustand
- 307: zweites Zeitintervall
- 309: Messung läuft
- 311: drittes Zeitintervall
- 313: Anzeigesignal
- 315: Datenübertragung
- 317: vierte Zeitdauer
- 319: fünfte Zeitdauer
- INT: Interrupt-Signal
- SCL: Taktleitung
- SDA: Datenleitung
- T: Zeitintervall
- t1: Zeitdauer
- t2: Zeitdauer

## Patentansprüche

1. Optoelektronische Sensorvorrichtung, mit:
einer optoelektronischen Detektionseinrichtung (15), die zur Detektion von Licht ausgebildet ist und die in Abhängigkeit von detektiertem Licht ein elektrisches Signal bereitstellt, welches von der detektierten Lichtintensität abhängig ist,
einer Signalerfassungseinrichtung (21), welche dazu ausgebildet ist, während eines Zeitintervalls von sich wiederholenden Zeitintervallen (T) wenigstens einen Signalwert des elektrischen Signals in einem Speicher (19) zu speichern, und
eine Kommunikationsschnittstelle,
**dadurch gekennzeichnet, dass**
die Signalerfassungseinrichtung (21) dazu ausgebildet ist nach Ablauf des Zeitintervalls (T) und zu Beginn eines nachfolgenden Zeitintervalls ein zu dem wenigstens einen Signalwert unterschiedliches Anzeigesignal (313) über die Kommunikationsschnittstelle der Sensorvorrichtung auszugeben, um zu signalisieren, dass der wenigstens einen Signalwert aus dem Speicher (19) ausgelesen werden kann.

2. Optoelektronische Sensorvorrichtung nach Anspruch 1, **dadurch gekennzeichnet, dass**
das Zeitintervall (T) einstellbar ist, insbesondere über eine weitere Kommunikationsschnittstelle (25) der Sensorvorrichtung (11).

3. Optoelektronische Sensorvorrichtung nach Anspruch 1 oder 2,
**dadurch gekennzeichnet, dass**
das Anzeigesignal (313) einem ersten Wert eines digitalen Signals, insbesondere ein Interrupt-Signal (INT), entspricht.

4. Optoelektronische Sensorvorrichtung nach Anspruch 3,
**dadurch gekennzeichnet, dass**
die Sensorvorrichtung (11) dazu ausgebildet ist außerhalb einer Zeitdauer (t1),
während der das dem ersten Wert entsprechende Anzeigesignal (313) ausgegeben wird, einen vom ersten Wert verschiedenen zweiten Wert (305) des digitalen Signals (INT) auszugeben.

5. Optoelektronische Sensorvorrichtung nach Anspruch 3 oder 4,
**dadurch gekennzeichnet, dass**
die Sensorvorrichtung (11) dazu ausgebildet ist, den ersten Wert (313) in einen zweiten Wert (305) zu ändern, sobald wenigstens ein Byte des Signalwerts aus dem Speicher (19) ausgelesen ist.

6. Optoelektronische Sensorvorrichtung nach einem der vorhergehenden Ansprüche,
**dadurch gekennzeichnet, dass**
die Sensorvorrichtung (11) dazu ausgebildet ist, das Anzeigesignal (313) über einen Interrupt-Ausgang (27) als Kommunikationsschnittstelle der Sensorvorrichtung (11) auszugeben.

7. Optoelektronische Sensorvorrichtung nach einem der vorhergehenden Ansprüche,
**dadurch gekennzeichnet, dass**
die Signalerfassungseinrichtung (21) dazu ausgebildet ist, in dem Speicher (19) nur wenigsten einen und bevorzugt genau einen Signalwert des jeweiligen aktuellen Zeitintervalls (T) zu speichern.

8. Optoelektronische Sensorvorrichtung nach Anspruch 7,
**dadurch gekennzeichnet, dass**
die Signalerfassungseinrichtung (21) dazu ausgebildet ist, den wenigstens einen und bevorzugt genau einen Signalwert aus einem vorhergehenden Zeitintervall (T) aus dem Speicher (19) zu löschen oder zu überschreiben.

9. Optoelektronische Sensorvorrichtung nach einem der vorhergehenden Ansprüche,
**dadurch gekennzeichnet, dass**
das Anzeigesignal (313) einem ersten Wert eines digitalen Signals, insbesondere ein Interrupt-Signal (INT), entspricht, und die Sensorvorrichtung (11) dazu ausgebildet ist, den ersten Wert (313) in einen zweiten Wert (305) zu ändern, sobald wenigstens ein Byte des Signalwerts aus dem Speicher (19) ausgelesen ist.

10. Optoelektronische Sensorvorrichtung nach einem der vorhergehenden Ansprüche,
**dadurch gekennzeichnet, dass**
die Sensorvorrichtung (11), insbesondere die Signalerfassungseinrichtung (21), dazu ausgebildet ist, pro Zeitintervall genau einen Signalwert in dem Speicher (19) zu speichern.

11. Optoelektronische Sensorvorrichtung nach einem der vorhergehenden Ansprüche,
**dadurch gekennzeichnet, dass**
der Speicher (19) ein Speicherregister, insbesondere mit 2 Byte Speicherkapazität, ist.

12. Detektor, insbesondere zur Ermittlung von Lichtflackern, wobei der Detektor umfasst:
eine optoelektronische Sensorvorrichtung (11) nach einem der vorhergehenden Ansprüche, und
eine Steuereinrichtung (13), die mit der Sensorvorrichtung (11) in Kommunikationsverbindung steht.

13. Detektor nach Anspruch 12,
**dadurch gekennzeichnet, dass**
die Steuereinrichtung (13), insbesondere mittels einer bzw. der weiteren Kommunikationsschnittstelle (25) zwischen der Sensorvorrichtung (11) und der Steuereinrichtung (13), das Zeitintervall (T) festlegt.

14. Detektor nach Anspruch 12 oder 13,
**dadurch gekennzeichnet, dass**
die Steuereinrichtung (13) dazu ausgebildet ist, mittels der Kommunikationsschnittstelle (27), wie etwa einem Interrupt-Ausgang (27), zwischen der Sensorvorrichtung (11) und der Steuereinrichtung (13), das Anzeigesignal (313) zu detektieren und in Reaktion auf die Detektion des Anzeigesignals (313) den wenigstens einen und bevorzugt den genau einen Signalwert aus dem Speicher (19) der Sensorvorrichtung (11) auszulesen.

15. Detektor nach Anspruch 14,
**dadurch gekennzeichnet, dass**
die Steuereinrichtung (13) dazu ausgebildet ist, die ausgelesenen Signalwerte von mehreren aufeinanderfolgenden Zeitintervallen (T) zu sammeln.

16. Detektor nach einem der Ansprüche 12 bis 15,
**dadurch gekennzeichnet, dass**
die Steuereinrichtung (13) dazu ausgebildet ist, in Abhängigkeit von den Signalwerten von mehreren aufeinanderfolgenden Zeitintervallen (T) eine Flackerfrequenz für das detektierte Licht zu ermitteln.

17. Elektronisches Gerät, insbesondere tragbares elektronischen Gerät, mit:
einer optoelektronischen Sensorvorrichtung nach einem der Ansprüche 1 bis 11, oder
mit einem Detektor nach einem der Ansprüche 12 bis 16,
wobei die optoelektronische Detektionseinrichtung (15) derart in einem Gehäuse des elektronischen Geräts angeordnet ist, dass von außen einfallendes Licht detektierbar ist.

18. Elektronisches Gerät nach Anspruch 17,
**dadurch gekennzeichnet, dass**
es sich um ein Mobiltelefon, ein Smartphone, ein Tablet oder eine Kamera handelt.

19. Verfahren zum Betreiben einer optoelektronischen Sensorvorrichtung nach einem der Ansprüche 1 bis 11,
**dadurch gekennzeichnet, dass**
während eines sich wiederholenden Zeitintervalls (T) ein elektrisches Signal bereitgestellt wird, wobei das elektrische Signal in Abhängigkeit einer detektierten Lichtintensität erzeugt wird,
während des Zeitintervalls (T) wenigstens ein und bevorzugt genau ein Signalwert des elektrischen Signals in dem Speicher (19) gespeichert wird, und
nach Ablauf des Zeitintervalls (T) das Anzeigesignal (313) über die Kommunikationsschnittstelle der Sensorvorrichtung ausgegeben wird.

20. Verfahren zum Betreiben eines Detektors nach einem der Ansprüche 12 bis 17,
**dadurch gekennzeichnet, dass**
die Sensorvorrichtung (11) nach Ablauf desZeitintervalls (T) das Anzeigesignal (313) ausgibt,
die Steuereinrichtung (13) das Anzeigesignal (313) detektiert und in Reaktion auf die Detektion des Anzeigesignals den wenigstens einen Signalwert aus dem Speicher (19) der Sensorvorrichtung (11) ausliest,
nach dem Auslesen das Anzeigesignal bis zum Ablauf des nächsten Zeitintervalls (T) nicht angezeigt wird, und
während des nächsten Zeitintervalls (T) wiederum wenigstens ein oder genau ein Signalwert des elektrischen Signals in dem Speicher (19) gespeichert wird.

## Claims

1. Optoelectronic sensor device, comprising:
an optoelectronic detection device (15) configured to detect light and configured to provide an electrical signal as a function of detected light based on a detected light intensity
a signal detection device (21) configured to store at least one signal value of the electrical signal in a memory (19) during a time interval of repeating time intervals (T), and
a communication interface,
**characterized in that**
the signal detection device (21) is configured to output a display signal (313), which is different from the at least one signal value, via the communication interface of the sensor device after the time interval (T) has elapsed and at the beginning of a subsequent time interval in order to signal that the at least one signal value can be read out from the memory (19).

2. Optoelectronic sensor device according to claim 1, **characterized in that**
the time interval (T) is adjustable, in particular via a further communication interface (25) of the sensor device (11).

3. Optoelectronic sensor device according to claim 1 or 2, **characterized in that**
the display signal (313) corresponds to a first value of a digital signal, in particular an interrupt signal (INT).

4. Optoelectronic sensor device according to claim 3, **characterized in that**
the sensor device (11) is configured to output a second value (305) of the digital signal (INT), which is different from the first value, outside a time period (t1) during which the display signal (313) corresponding to the first value is output.

5. Optoelectronic sensor device according to claim 3 or 4, **characterized in that**
the sensor device (11) is configured to change the first value (313) into a second value (305) as soon as at least one byte of the signal value is read out from the memory (19).

6. Optoelectronic sensor device according to any one of the preceding claims,
**characterized in that**
the sensor device (11) is configured to output the display signal (313) via an interrupt output (27) as a communication interface of the sensor device (11).

7. Optoelectronic sensor device according to any one of the preceding claims,
**characterized in that**
the signal detection device (21) is configured to store at least one and preferably exactly one signal value of the respective current time interval (T) in the memory (19).

8. Optoelectronic sensor device according to claim 7,
**characterized in**
the signal detection device (21) is configured to delete or overwrite the at least one and preferably exactly one signal value from a preceding time interval (T) from the memory (19).

9. Optoelectronic sensor device according to any one of the preceding claims,
**characterized in that**
the display signal (313) corresponds to a first value of a digital signal, in particular an interrupt signal (INT), and the sensor device (11) is configured to change the first value (313) to a second value (305) as soon as at least one byte of the signal value is read out of the memory (19).

10. Optoelectronic sensor device according to any one of the preceding claims,
**characterized in that**
the sensor device (11), in particular the signal detection device (21), is configured to store exactly one signal value per time interval in the memory (19).

11. Optoelectronic sensor device according to any one of the preceding claims,
**characterized in that**
the memory (19) is a memory register, in particular with a memory capacity of 2 bytes.

12. A detector, in particular for detecting light flicker, the detector comprising:
an optoelectronic sensor device (11) according to any one of the preceding claims, and
a control device (13) in communication with the sensor device (11).

13. Detector according to claim 12,
**characterized in that**
the control device (13) is configured to determine the time interval (T), in particular by means of a further communication interface (25) between the sensor device (11) and the control device (13).

14. Detector according to claim 12 or 13,
**characterized in that**
the control device (13) is configured to detect the display signal (313) by means of the communication interface (27), such as an interrupt output (27), between the sensor device (11) and the control device (13) and, in response to the detection of the display signal (313), to read out the at least one and preferably the exact one signal value from the memory (19) of the sensor device (11).

15. Detector according to claim 14,
**characterized in that**
the control device (13) is configured to collect the readout signal values from several successive time intervals (T) .

16. Detector according to any one of claims 12 to 15, **characterized in that**
the control device (13) is configured to determine a flicker frequency for the detected light as a function of the signal values of a plurality of successive time intervals (T).

17. An electronic device, in particular portable electronic device, comprising:
an optoelectronic sensor device according to any one of claims 1 to 11, or
a detector according to any one of claims 12 to 16,
wherein the optoelectronic sensor device (15) is arranged in a housing of the electronic device in such a way that incident light from the outside can be detected.

18. Electronic device according to claim 17,
**characterized in that**
the electronic device is a cell phone, a smartphone, a tablet or a camera.

19. A method of operating an optoelectronic sensor device according to any one of claims 1 to 11,
**characterized in that**
an electrical signal is provided during a repetitive time interval (T), wherein the electrical signal is generated as a function of the detected light intensity,
at least one and preferably exactly one signal value of the electrical signal is stored in the memory (19) during the time interval (T), and
after the time interval (T) has elapsed, the display signal (313) is output via the communication interface of the sensor device.

20. A method of operating a detector according to any one of claims 12 to 17,
**characterized in that**
the sensor device (11) is outputs the display signal (313) after the time interval (T) has elapsed,
the control device (13) detects the display signal (313) and, in response to the detection of the display signal, reads out the at least one signal value from the memory (19) of the sensor device (11),
after reading out, the display signal is not displayed until the next time interval (T) has elapsed, and
during the next time interval (T), again at least one or exactly one signal value of the electrical signal is stored in the memory (19).

## Revendications

1. Dispositif de détection optoélectronique, comprenant:
un dispositif de détection optoélectronique (15) qui est conçu pour détecter la lumière et qui, en fonction de la lumière détectée, fournit un signal électrique qui dépend de l'intensité lumineuse détectée
un dispositif d'acquisition de signal (21) qui est conçu pour stocker dans une mémoire (19) au moins une valeur de signal du signal électrique pendant un intervalle de temps d'intervalles de temps répétitifs (T) , et
une interface de communication,
**caractérisé en ce que**
le dispositif de détection de signal (21) est conçu pour , après l'écoulement de l'intervalle de temps (T) et au début d'un intervalle de temps suivant , émettre un signal d'affichage (313) différent de la au moins une valeur de signal par l'intermédiaire de l'interface de communication du dispositif de détection , afin de signaler que la au moins une valeur de signal peut être lue dans la mémoire (19) .

2. Dispositif de détection optoélectronique selon la revendication 1,
**caractérisé en ce que**
l'intervalle de temps (T) est réglable, notamment par l'intermédiaire d'une autre interface de communication (25) du dispositif capteur (11).

3. Dispositif de détection optoélectronique selon la revendication 1 ou 2,
**caractérisé en ce que**
le signal d'indication (313) correspond à une première valeur d'un signal numérique, en particulier un signal d'interruption (INT).

4. Dispositif de détection optoélectronique selon la revendication 3,
**caractérisé en ce que**
le dispositif capteur (11) est conçu pour émettre, en dehors d'une durée (t1) pendant laquelle le signal d'affichage (313) correspondant à la première valeur est émis, une deuxième valeur (305) du signal numérique (INT) différente de la première valeur.

5. Dispositif de détection optoélectronique selon la revendication 3 ou 4,
**caractérisé en ce que**
le dispositif de détection (11) est conçu pour, à modifier la première valeur (313) en une deuxième valeur (305) dès qu'au moins un octet de la valeur de signal est lu dans la mémoire (19).

6. Dispositif de détection optoélectronique selon l'une quelconque des revendications précédentes,
**caractérisé en ce que**
le dispositif capteur (11) est conçu pour émettre le signal d'affichage (313) via une sortie d'interruption (27) en tant qu'interface de communication du dispositif capteur (11).

7. Dispositif de détection optoélectronique selon l'une quelconque des revendications précédentes,
**caractérisé en ce que**
le dispositif d'acquisition de signaux (21) est conçu pour ne stocker dans la mémoire (19) qu'au moins une et de préférence exactement une valeur de signal de l'intervalle de temps actuel respectif (T).

8. Dispositif de détection optoélectronique selon la revendication 7,
caractérisé en
le dispositif d'acquisition de signaux (21) est conçu pour effacer ou écraser dans la mémoire (19) la au moins une et de préférence exactement une valeur de signal provenant d'un intervalle de temps (T) précédent.

9. Dispositif de détection optoélectronique selon l'une quelconque des revendications précédentes,
**caractérisé en ce que**
le signal d'affichage (313) correspond à une première valeur d'un signal numérique, en particulier un signal d'interruption (INT), et le dispositif de détection (11) est conçu pour changer la première valeur (313) en une deuxième valeur (305) dès qu'au moins un octet de la valeur de signal est lu dans la mémoire (19).

10. Dispositif de détection optoélectronique selon l'une quelconque des revendications précédentes,
**caractérisé en ce que**
le dispositif de détection (11), en particulier le dispositif d'acquisition de signaux (21), est conçu pour stocker exactement une valeur de signal par intervalle de temps dans la mémoire (19).

11. Dispositif de détection optoélectronique selon l'une quelconque des revendications précédentes,
**caractérisé en ce que**
la mémoire (19) est un registre de mémoire, en particulier avec une capacité de mémoire de 2 octets.

12. Détecteur, en particulier pour la détection du scintillement de la lumière, le détecteur comprenant:
un dispositif de détection optoélectronique (11) selon l'une des revendications précédentes, et
un dispositif de commande (13) qui est en liaison de communication avec le dispositif de détection (11).

13. Détecteur selon la revendication 12,
**caractérisé en ce que**
le dispositif de commande (13) détermine l'intervalle de temps (T), en particulier au moyen d'une ou de l'autre interface de communication (25) entre le dispositif capteur (11) et le dispositif de commande (13).

14. Détecteur selon la revendication 12 ou 13,
**caractérisé en ce que**
le dispositif de commande (13) est conçu pour détecter le signal d'indication (313) au moyen de l'interface de communication (27), telle qu'une sortie d'interruption (27), entre le dispositif de détection (11) et le dispositif de commande (13), et pour lire, en réponse à la détection du signal d'indication (313), l'au moins une et de préférence l'exacte une valeur de signal dans la mémoire (19) du dispositif de détection (11).

15. Détecteur selon la revendication 14,
**caractérisé en ce que**
le dispositif de commande (13) est conçu pour collecter les valeurs de signal lues de plusieurs intervalles de temps (T) successifs.

16. Détecteur selon l'une quelconque des revendications 12 à 15,
**caractérisé en ce que**
le dispositif de commande (13) est conçu pour déterminer, en fonction des valeurs de signal de plusieurs intervalles de temps (T) successifs, une fréquence de scintillement pour la lumière détectée.

17. Appareil électronique, en particulier appareil électronique portable, avec:
d'un dispositif de détection optoélectronique selon l'une quelconque des revendications 1 à 11, ou
avec un détecteur selon l'une des revendications 12 à 16, le dispositif de détection optoélectronique (15) étant disposé dans un boîtier de l'appareil électronique de telle sorte que la lumière incidente de l'extérieur puisse être détectée.

18. Appareil électronique selon la revendication 17, **caractérisé en ce que**
il s'agit d'un téléphone portable, d'un smartphone, d'une tablette ou d'un appareil photo.

19. Procédé de mise en œuvre d'un dispositif de détection optoélectronique selon l'une quelconque des revendications 1 à 11,
**caractérisé en ce que**
pendant un intervalle de temps répétitif (T), un signal électrique est fourni, le signal électrique étant généré en fonction d'une intensité lumineuse détectée,
pendant l'intervalle de temps (T), au moins une et de préférence exactement une valeur de signal du signal électrique est enregistrée dans la mémoire (19), et
après l'écoulement de l'intervalle de temps (T), le signal d'affichage (313) est émis via l'interface de communication du dispositif de détection.

20. Procédé de fonctionnement d'un détecteur selon l'une quelconque des revendications 12 à 17,
**caractérisé en ce que**
le dispositif capteur (11) émet le signal d'affichage (313) après l'écoulement de l'intervalle de temps (T),
le dispositif de commande (13) détecte le signal d'indication (313) et, en réponse à la détection du signal d'indication, lit la au moins une valeur de signal dans la mémoire (19) du dispositif de détection (11),
après la lecture, le signal d'affichage n'est pas affiché jusqu'à l'expiration de l'intervalle de temps suivant (T), et que
pendant l'intervalle de temps suivant (T), au moins une ou exactement une valeur de signal du signal électrique est à nouveau enregistrée dans la mémoire (19).
